# EUROPEAN PATENT APPLICATION

(11) **EP 2 547 089 A1**
(43) Date of publication of application: **16.01.2013**
(21) Application number: 11753036.0
(22) Date of filing: 07.03.2011
(51) Int. Cl.: H04N 5/228, G03B 5/00, G03B 15/00, G03B 17/18, H04N 5/232

(54) **ELECTRONIC ZOOM DEVICE, ELECTRONIC ZOOM METHOD, AND PROGRAM**

(30) Priority: 09.03.2010 JP 2010052163
(71) Applicant: Panasonic Corporation, Kadoma-shi Osaka 571-8501 (JP)
(72) Inventor: Otake, Naoto, Osaka 540-6207 (JP)
(74) Representative: Grünecker, Kinkeldey, Stockmair & Schwanhäusser
(86) International application number: PCT/JP2011/001341
(87) International publication number: WO 2011/111371

(57) **Abstract**

Provided is an electronic zoom device which can change the object to be zoomed with high operability even if a plurality of objects are recognized within an image to be processed. An electronic zoom device includes: an image display unit (19) which displays an image on a display screen; an object detection unit (13) which detects a plurality of objects in the image which is displayed on the display screen; a reference position detection unit (14) which detects reference positions of the detected objects; a ratio calculating unit (15) which calculates respective ratio parameters that change according to sizes of the detected objects relative to the display screen; a center position setting unit (16) which sets, as a zoom center position (O), a reference position of a first object whose calculated ratio parameter meets a predetermined criterion; and a zoom processing unit (17) which performs zoom processing of the image displayed on the display screen with a focus on the zoom center position. The zoom center position setting unit (16) changes the zoom center position from the reference position of the first object to a reference position of a second object whose ratio parameter meets the predetermined criterion when the ratio parameter of the first object does not meet the predetermined criterion any more.

## Description

### Technical Field

The present invention relates to an electronic zoom device, an electronic zoom method, and a program.

### Background Art

Capturing devices, such as digital cameras, are often equipped with a zoom function. Although the zoom function is typically an optical zoom which changes the size of a capturing region by adjusting the focal distance of an optical lens, a function called a digital zoom or an electronic zoom is often loaded in devices such as a digital camera in which digital processing is possible. In the electronic zoom, an image acquired by capturing is electronically processed, and a region in the image is extracted so that the region can be expanded and displayed or reduced and displayed. Besides a scaling processing to the center of a screen as achieved in the optical zoom, a scaling processing to an arbitrary position can be performed in the electronic zoom.

Such electronic zoom is used when an image in the capturing region is displayed for preview on a display screen at the time of capturing of a digital camera, when an image after capturing is reproduced with any display devices, or the like. The electronic zoom can be used in various display devices such as a photo frame which have a display region expanding function beside the capturing devices such as a digital camera.

As techniques related to the electronic zoom, for example, techniques disclosed in Patent Literature 1 and Patent Literature 2 are known.

Patent Literature 1 discloses an electronic zoom which makes it possible to automatically follow a target subject even if the subject moves in the photographable region in a capturing device such as a video camera. In particular, the features of images are compared between a plurality of feeding and a motion vector is detected, and electronic zoom processing and the movement of a display region are automatically performed so that the movement and the size of the subject may be followed.

It is disclosed in Patent Literature 2 that, when a subject which moves is monitored with a television camera, the motion of the subject is followed automatically and the subject is always expanded and displayed in the center of a screen. In particular, a photographable area is divided into a plurality of regions, the changes of features such as a luminance level or a color for each region are detected in a plurality of fields, and the center position of the zoom and the zoom magnifying factor are adjusted automatically according to the regions where the change is detected.

### Citation List

### Patent Literature

Patent Literature 1: JP-A-6-350897
Patent Literature 2: JP-A-11-75103

### Summary of Invention

### Technical Problem

In recent years, a technique of recognizing various objects contained in an image is developed quickly. Therefore, not only objects such as a person included in the image are recognized, but also it becomes possible to recognize a region of the person's face, to distinguish between a plurality of persons' faces, and to further recognize small parts of the faces.

Therefore, it is also possible to combine the technique of object recognition and the electronic zoom. For example, when a still picture is displayed, it is possible to detect a region where a specific person exists in the still picture, and to control to expand and display (zoom-in) the region so that an expanded image is displayed in the center of a display screen.

However, in the related techniques disclosed in Patent Literatures 1 and 2, the object which should be traced is assumed to be only one object and a plurality of objects cannot be traced. Therefore, when a plurality of objects are simultaneously recognized in a still picture, a user has to perform some input operation to choose one of the objects in order to specify the object to be traced. Thus, the operability is insufficient.

The present invention is intended to provide an electronic zoom device, an electronic zoom method, and a program which can change the object to be zoomed with high operability even if a plurality of object/regions are recognized within an image to be processed.

### Solution to Problem

An electronic zoom device according to the invention is configured by including: an image display unit which is configured to display an image on a display screen; an object detection unit which is configured to detect a plurality of objects in the image which is displayed on the display screen; a reference position detection unit which is configured to detect reference positions of the objects which are detected by the object detection unit; a ratio calculating unit which is configured to calculate respective ratio parameters that change according to sizes of the objects detected by the object detection unit relative to the display screen; a zoom center position setting unit which is configured to set, as a zoom center position, a reference position of a first object whose ratio parameter calculated by the ratio calculating unit meets a predetermined criterion; and a zoom processing unit which is configured to perform zoom processing of the image displayed on the display screen with a focus on the zoom center position, wherein the zoom center position setting unit changes the zoom center position from the reference position of the first object to a reference position of a second object whose ratio parameter meets the predetermined criterion when the ratio parameter of the first object does not meet the predetermined criterion any more.

According to this electronic zoom device, even if a plurality of objects are recognized in an image to be processed, it is possible to change the object for zoom processing with high operability. Therefore, when a user looks at the display screen, a natural zoom processing can be performed.

In the electronic zoom device according to the invention, the ratio calculating unit calculates a ratio of an image of an object detected by the object detection unit to the whole display screen as the ratio parameter, and when the zoom center position setting unit has set, as the zoom center position, the reference position of the first object whose image ratio calculated by the ratio calculating unit is less than a predetermined ratio and the image ratio of the first object becomes or more than the predetermined ratio, the zoom center position setting unit changes the zoom center position from the reference position of the first object to the reference position of the second object whose image ratio is less than the predetermined ratio.

According to this electronic zoom device, at the time of zoom processing, the object to be zoom-processed can be shifted to a suitable object, according to the ratio of the display size of each of the objects to the whole display screen.

In the electronic zoom device according to the invention, the second object is the maximum in image ratio among the objects whose image ratio is less than the predetermined ratio.

According to this electronic zoom device, at the time of zoom processing, the object to be zoom-processed can be shifted to a suitable object according to the sizes of the objects with the change of the display size of each of the objects. Therefore, a natural zoom processing can be performed, without a sudden change of the screen display.

In the electronic zoom device according to the invention, the reference position of the second object is closest to the center position of the display screen.

According to this electronic zoom device, at the time of zoom processing, the object to be zoom-processed can be shifted to an object with a short distance from the display screen central position with the change of the display size of each of the objects. Therefore, a natural zoom processing can be performed, without a sudden change of the screen display.

In the electronic zoom device according to the invention, the reference position of the second object is located in a region of the first object.

According to this electronic zoom device, at the time of zoom processing, the object to be zoom-processed can be shifted to an object with a short distance from the reference position of the first object with the change of the display size of each of the objects. Therefore, a natural zoom processing can be performed, without a sudden change of the screen display.

In the electronic zoom device according to the invention, when a state changes to an undetected state that no objects are detected by the object detection unit, the zoom center position setting unit forbids change of the zoom center position until the state reaches a widest angle state.

According to this electronic zoom device, even if a state that no objects are detected is reached, the zoom center position will not be changed suddenly and a natural zoom processing can be performed.

In the electronic zoom device according to the invention, when the zoom center position is changed by the zoom center position setting unit, the image display unit indicates that the zoom center position is changed.

According to this electronic zoom device, the object to be zoom-processed can be reliably grasped with the visible information displayed.

An electronic zoom method according to the invention is an electronic zoom method in an electronic zoom device which displays an image on a display screen, the electronic zoom method including the steps of: detecting a plurality of objects in the image displayed on the display screen; detecting reference positions of the detected objects; calculating respective ratio parameters that change according to sizes of the detected objects relative to the display screen; setting a reference position of a first object whose calculated ratio parameter meets a predetermined criterion as a zoom center position; performing zoom processing of the image displayed on the display screen with a focus on the zoom center position; and changing the zoom center position from the reference position of the first object to a reference position of a second object whose ratio parameter meets the predetermined criterion when the ratio parameter of the first object does not meet the predetermined criterion any more.

According to this electronic zoom method, even if a plurality of objects are recognized in an image to be processed, it is possible to change the object for zoom processing with high operability. Therefore, when a user looks at the display screen, a natural zoom processing can be performed.

A program according to the invention is a program for causing a computer to execute each step of the electronic zoom method.

According to this program, even if a plurality of objects are recognized in an image to be processed, it is possible to change the object for zoom processing with high operability. Therefore, when a user looks at the display screen, a natural zoom processing can be performed.

### Advantageous Effects of Invention

According to the invention, even if a plurality of objects are recognized in an image to be processed, it is possible to change the object to be subject to zoom processing with high operability.

### Brief Description of Drawings

Fig. 1 is a block diagram which shows an example of main components of a digital camera according to an embodiment of the present invention.
Fig. 2 is a flow chart which shows an example of a zoom center position control of the digital camera according to the embodiment of the present invention.
In Fig. 3, (A) to (H) show display examples when the zoom center position control shown in Fig. 2 is performed.
Fig. 4 is a flow chart which shows a variation 1 of the zoom center position control with the digital camera according to the embodiment of the present invention.
In Fig. 5, (A) to (D) show display examples when the zoom center position control shown in Fig. 4 is performed.
Fig. 6 is a flow chart which shows a variation 2 of the zoom center position control with the digital camera according to the embodiment of the present invention.
In Fig. 7, (A) to (F) show display examples when the zoom center position control shown in Fig. 6 is performed.
Fig. 8 is a flow chart which shows a variation 3 of the zoom center position control with the digital camera according to the embodiment of the present invention.
In Fig. 9, (A) to (C) show display examples when the zoom center position control shown in Fig. 8 is performed.

### Modes for Carrying out Invention

Hereinafter, an electronic zoom device, an electronic zoom method, and a program according to an embodiment of the present invention are explained in detail with reference to the figures.

The electronic zoom device of this embodiment can be considered as a digital camera which captures an image, an image display device which reads, reproduces and displays image data obtained by capturing beforehand from recording media such as a memory card. Here, a digital camera is assumed as an example of the electronic zoom device.

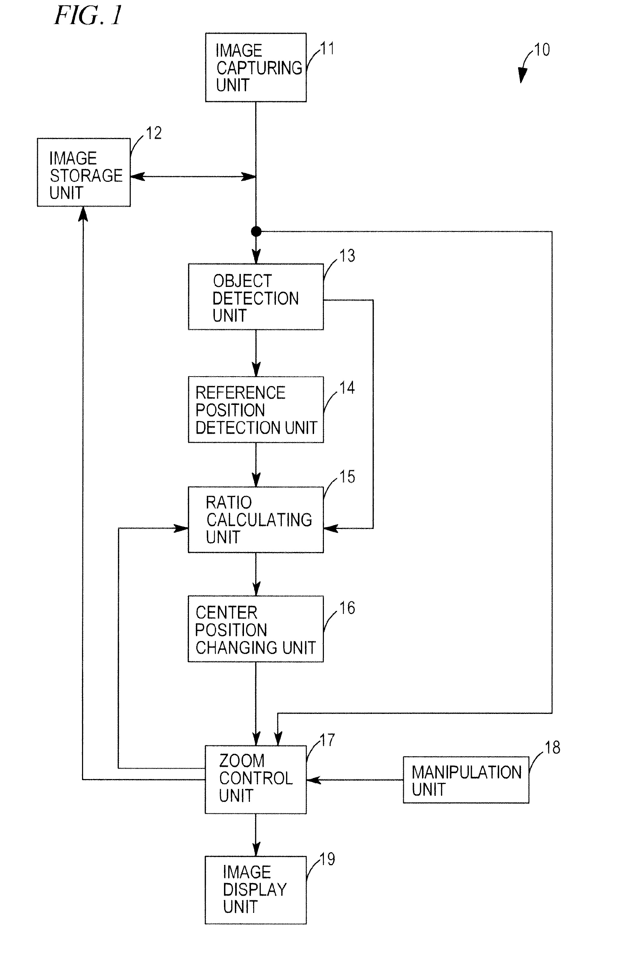

Fig. 1 is a block diagram which shows an example of main components of the digital camera according to the embodiment of the present invention.
A digital camera 10 shown in Fig. 1 includes an image capturing unit 11, an image storage unit 12, an object detection unit 13, a reference position detection unit 14, a ratio calculating unit 15, a center position changing unit 16, a zoom control unit 17, a manipulation unit 18, and an image display unit 19.

The image capturing unit 11 is provided with an imaging device, such as a CCD imaging sensor, in order to capture a predetermined capturing area including any subjects. Images produced by capturing with the imaging device are outputted to the object detection unit 13 as image data of still pictures such as a photograph, or videos which include a set of a plurality of frames of images.

The image storage unit 12 includes a nonvolatile memory storage such as a memory card, and accumulates the image data produced by capturing with the image capturing unit 11 or images which are zoom-processed by the zoom control unit 17 as data of still pictures or videos.

The image display unit 19 is formed as a liquid crystal display device or the like. The image display unit 19 is used for the preview display of an image to be captured, and a reproduction display for a user to appreciate the captured image. For example, the image data outputted from the image capturing unit 11 are zoom-processed by the zoom control unit 17 and then inputted into the image display unit 19. When the image is displayed in real time, the image to be captured can be displayed for preview. Further, when any image data, which are captured beforehand and stored in the image storage unit 12, are read out from the image storage unit 12, zoom-processed by the zoom control unit 17, and inputted into the image display unit 19, the captured still pictures or videos can be reproduced and displayed.

The zoom control unit 17 provides an electronic zoom function which extracts a part of an image to be processed, and performs zoom processing with digital image processing. In the zoom processing, at least one of an expanded display control (zoom-in) and a reduced display control (zoom-out) is performed. That is, the zoom control unit 17 extracts an area which is decided with a zoom magnifying factor from the image to be processed, performs at least one of the expansion and the reduction with a position specified in the region of the image (zoom center position) centered, and outputs. The zoom control unit 17 outputs the image after the zoom processing to the image display unit 19 or the image storage unit 12.

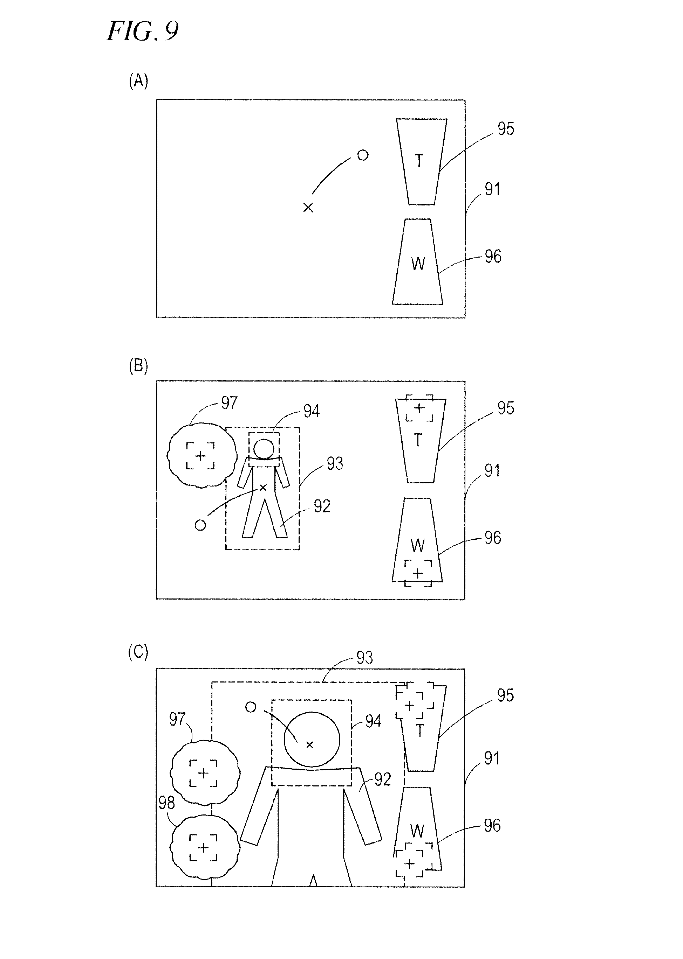

The manipulation unit 18 includes a plurality of operation buttons for receiving input operations from a user. For example, a zoom-in button, a zoom-out button, a capturing button (refer to Fig. 9), and the like are contained in the manipulation unit 18. With an input operation, the manipulation unit 18 outputs a signal indicating a zoom-in, a zoom-out or the like to the zoom control unit 17. The manipulation unit 18 may be a touch panel which is arranged on a display screen of the image display unit 19.

The object detection unit 13 recognizes various objects contained in an image by analyzing the contents of the image data from the image capturing unit 11 or the image storage unit 12, and outputs information on each of the objects to the reference position detection unit 14. That is, a plurality of objects in the image displayed by the image display unit 19 are detected. In this embodiment, "a plurality of objects" also has the meaning of a plurality of regions of one object. The object detecting function can be realized by using various publicly known image recognition techniques.

For example, when persons are included in an image as subjects, the object detection unit 13 can recognize the region of the whole body of each person, the region of the face of each person and the like as an independent object, respectively. When a table in which various kinds of dishes are lined up is contained in an image as a subject, the object detection unit 13 can recognize a region including all the dishes as one object, and also can recognize only a specific dish as one object.

The object detection unit 13 outputs area information showing the region of each of the one or more detected objects to the ratio calculating unit 15. The area information includes information showing the position or the size of a predetermined region such as a rectangle surrounding the detected object.

The reference position detection unit 14 detects the reference position of each of the objects detected by the object detection unit 13. For example, a position near the center of an objective such as the center position of a region surrounding the detected object, or almost the center position of the detected object is detected as a reference position.

The ratio calculating unit 15 calculates a ratio parameter Px for each of the objects detected by the object detection unit 13. The ratio parameter Px changes according to the size of the object detected by the object detection unit 13 relative to the display screen. The ratio of the display size (height or width pixels) of a region surrounding each of the objects displayed on the display screen to the size (height or width pixels) of the whole display screen of the image display unit 19 can be considered as an example of the ratio parameter Px. For example, when the size of the whole display screen is 1000 pixels and the size of an object is 850 pixels, the ratio parameter Px is set to 0.85. When a ratio is calculated, a zoom magnifying factor from the zoom control unit 17 is also considered. The ratio calculating unit 15 outputs information on the calculated ratio to the center position changing unit 16. The ratio of the area of an object to the area of the whole display screen may be also considered as a ratio parameter.

Since the size of the whole display screen of the image display unit 19 is generally constant, a part of the calculation of the ratio calculating unit 15 may be omitted. For example, it is also possible to use the display size of a region surrounding each of the objects as it is as a ratio parameter Px. It is also possible to use the result of subtracting the display size of an object from the size of the whole display screen as a ratio parameter Px.

With reference to the ratio parameter Px from the ratio calculating unit 15 for each of the plurality of objects detected by the object detection unit 13, the center position changing unit 16 determines candidates (candidates for zoom) of objects to be zoom-processed by the zoom control unit 17 (objects for zoom). The center position changing unit 16 determines an object for zoom from the candidates for zoom. The center position changing unit 16 outputs the reference position of the determined object for zoom to the zoom control unit 17 as a center position at the time of performing zoom processing (zoom center position). The object for zoom is changed with the movement of an object or the change of a zoom magnifying factor.

That is, the center position changing unit 16 sets the reference position of an object whose ratio parameter Px meets a predetermined criterion (for example, the ratio of the size of the object to the whole display screen is equal to or less than a predetermined ratio Pth), as a zoom center position. For example, when the predetermined ratio Pth is set to 0.9, since the ratio parameter Px, which is 0.85, is smaller than the predetermined ratio, the predetermined criterion is met. When the ratio parameter of an object which has the reference position set as the zoom center position does not meet the predetermined criterion any more, the center position changing unit 16 changes the zoom center position to the reference position of another object which meets the predetermined criterion.

Next, a zoom center position control with the digital camera 10 is described.

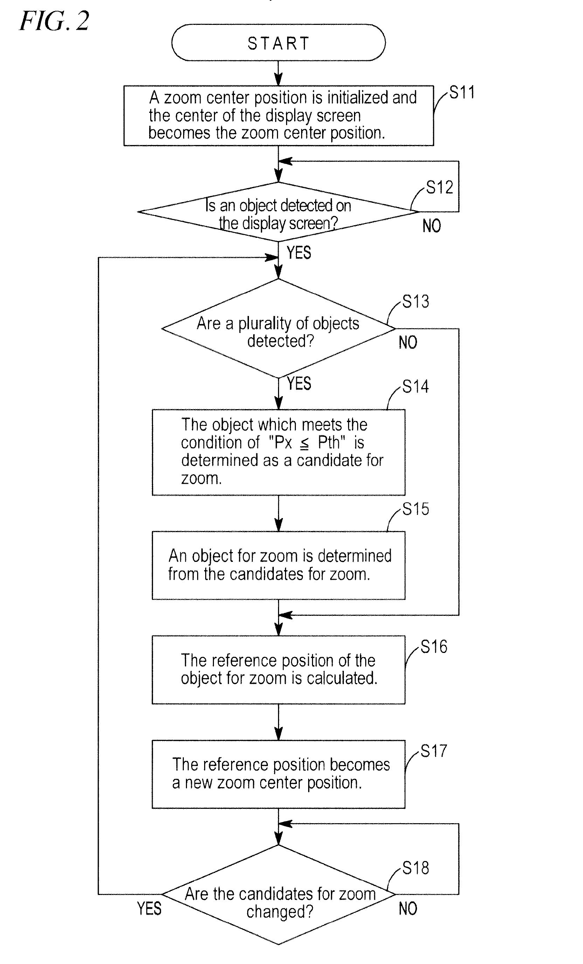

Fig. 2 is a flow chart which shows an example of the zoom center position control with the digital camera 10. The control shown in Fig. 2 is performed when an image outputted in real time from the image capturing unit 11 is displayed for preview by the image display unit 19, when an image read out from the image storage unit 12 is displayed by the image display unit 19, or the like.

In Step S11, the zoom control unit 17 initializes a zoom center position. In the initialization, the center position in the display screen of the image display unit 19 is set as the zoom center position. The zoom magnifying factor is assumed as, for example, 1. In the initialization state, the image outputted from the image capturing unit 11 or the image read out from the image storage unit 12 is displayed on the screen of the image display unit 19, without being zoom-processed.

In Step S12, the object detection unit 13 identifies whether one or more objects are detected from the image displayed on the display screen of the image display unit 19, which is the image inputted into the object detection unit 13 from the image capturing unit 11 or the image storage unit 12. If an object is detected, the flow proceeds to the following step S13.

In Step S13, the object detection unit 13 refers to the information on the detected object. It is identified whether a plurality of objects are detected. When a plurality of objects are detected, in order to specify an object for zoom, the flow proceeds to Step S14. On the other hand, when only one object is detected, the object is determined as an object for zoom and the flow proceeds to Step S16.

In Step S14, the center position changing unit 16 identifies whether the condition for determining candidates for zoom is met for each of the plurality of objects detected by the object detection unit 13. For example, it is identified whether the ratio parameter Px outputted from the ratio calculating unit 15 is equal to or less than a threshold value Pth. The object which meets the condition of "Px<=Pth" is determined as a candidate for zoom. For example, when the threshold value Pth is 0.8, only those objects whose display sizes on the screen are 80% or less of the size of the whole display screen meet the condition of candidates for zoom, and those objects whose display sizes are more than 80% are excluded from the candidates for zoom.

In Step S15, the center position changing unit 16 determines an object for zoom from the determined candidates for zoom. When there is only one object in the candidates for zoom, the candidate is determined as the object for zoom. When there are a plurality of candidates for zoom, it is preferable that the object which has the largest ratio parameter Px among those candidates is determined as the object for zoom. Thereby, since the ratio that the object which has the greatest Px has occupied in the display screen is larger than other objects, the change of the display screen at the time of zoom processing can be smoother. When there are a plurality of candidates for zoom with an equivalent display size, the object whose reference position is closer to the center of the display screen in those candidates for zoom may be preferentially determined as the object for zoom. Thereby, since the change of the zoom center position is finished with the minimum amount, the change of the display screen at the time of zoom processing can be smoother.

In Step S16, the reference position detection unit 14 calculates the reference position of the object for zoom determined by the center position changing unit 16.

In Step S17, the center position changing unit 16 determines the reference position calculated by the reference position detection unit 14 as a new zoom center position. The information on this zoom center position is given to the zoom control unit 17. When the new zoom center position is input, the zoom control unit 17 performs zoom processing on the image with the zoom center position as a center according to the specified zoom magnifying factor. The zoom control unit 17 gives the processed image to the image display unit 19.

In Step S18, the center position changing unit 16 identifies whether the candidates for zoom are changed. In particular, when a new object is added to the candidates for zoom with the change of the zoom magnifying factor or an object of the existing candidates for zoom does not meet the predetermined condition any more, the candidates for zoom are changed. When there is a change in the candidates for zoom, the flow returns to Step S13, and when there is no change, the Step S18 is performed again.

According to the zoom center position control shown in Fig. 2, even if a plurality of objects are recognized in the image to be processed, it is possible to change the object for zoom with high operability. That is, even if there are a plurality of candidates for zoom, it is possible to automatically follow a specific object as an object for zoom, without receiving an instruction through the manipulation unit 18.

Next, particular display examples of the image display unit 19 are described.

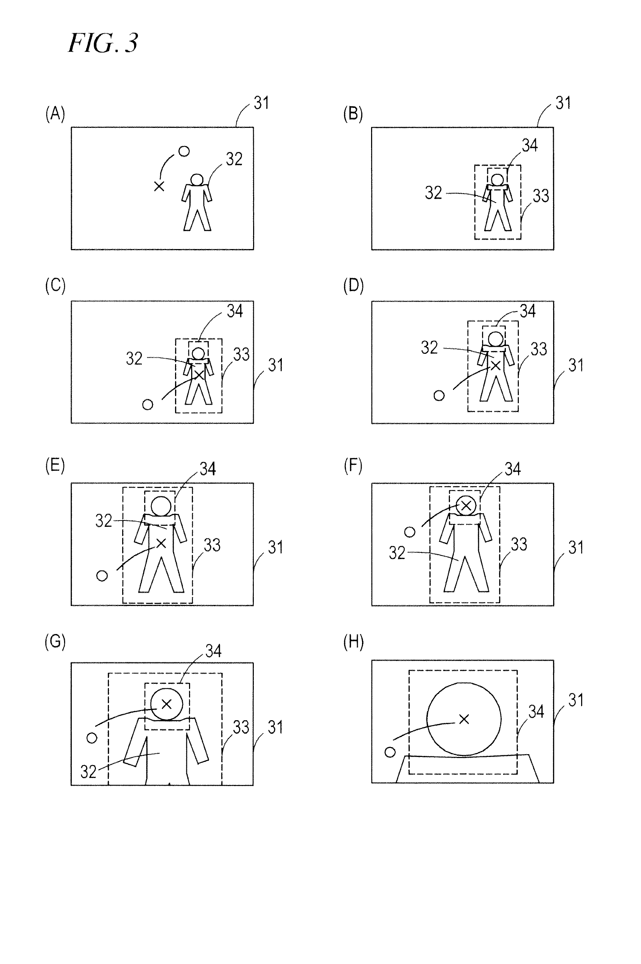

Fig. 3 shows display examples when the zoom center position control shown in Fig. 2 is performed.

In Fig. 3(A), a state before the zoom center position control is started is shown, and the whole image outputted from the image capturing unit 11 has appeared on a display screen 31. In Fig. 3(A), one person is included as a subject. In Fig. 3(A), the reference position of the whole image displayed by the image display unit 19 is assumed as a zoom center position O.

When the preview display of Fig. 3(A) is performed, the object detection unit 13 conducts image analysis, and as shown in Fig. 3(B), objects 33 and 34 are detected. In Fig. 3(B), the object 33 which is equivalent to the whole body of one person 32 is detected as one object, and the object 34 which is equivalent to the region of the person 32's face is detected as one object.
In the example of Fig. 3(B), rectangular frames are drawn by the image display unit 19 so that each of the detected objects may be surrounded. Something instead of a rectangular shape may be drawn, and in particular, such frame does not need to be displayed.

In the display of the image in Fig. 3(B), the object 33 showing the whole body of the person 32 and the object 34 showing the region of the face become candidates for zoom, respectively, and the object with a larger display size, that is, the object 33 showing the whole body of the person 32 is specified as an object for zoom. As shown in Fig. 3(C), the center neighborhood of the region of the object for zoom is detected as a reference position, and this position is specified as a new zoom center position O.

For example, if an instruction of zoom-in is given to the zoom control unit 17 by operating the zoom-in button of the manipulation unit 18, the zoom processing is started. According to the instruction of zoom-in, the zoom magnifying factor becomes larger, and the region containing the object 33 which is the object for zoom is expanded and displayed on the display screen 31, as shown in Figs. 3(D) and 3(E). Since the reference position of the object 33 which is the object for zoom becomes the zoom center position O, the expanded object 33 is displayed in the center of the display screen 31, as shown in Fig. 3(E).

On the other hand, in the state of Fig. 3(E), the object 33 which is the object for zoom is expanded to a size which is equivalent to the whole display screen 31, and it is considered that the condition of Px<=Pth is not met. In this case, the object for zoom does not meet the condition of the candidates for zoom, and an object which meets the condition in other candidates for zoom is chosen as an object for zoom. Here, the object 34 showing the region of the face which meets the condition of the candidates for zoom is chosen as the next object for zoom.

As shown in Fig. 3(F), the reference position of the object 34 showing the region of the face is detected, and this position is specified as a new zoom center position O. Thus, even if a user does not perform a special operation, the object for zoom is changed into the object 34 with change of the situation, and the zoom center position O is also changed.

If the operation of the zoom-in button is repeated, the zoom-in will be performed with the new zoom center position O as a center. Therefore, as shown in Figs. 3(G) and 3(H), the part near the center of the object 34 which is the changed object for zoom moves to the center of the display screen 31, and is expanded and displayed.

Therefore, when there are a plurality of objects that are recognized in the display screen 31, even if a user does not perform a selecting operation on any one of the objects, an object suitable for display can be chosen automatically and the operability is improved.

When the zoom-out button is operated, the zoom magnifying factor becomes smaller, the display size of each of the objects which appear in the display screen 31 will be changed, and a new object may be detected in the display screen 31. In that case, since the candidates for zoom are changed, the object for zoom or the zoom center position may be changed if necessary. For example, when the state of Fig. 3(G) is changed to the state of Fig. 3(D) by performing a zoom-out, in Fig. 3(G), the object 34 is detected as the object for zoom, and in Fig. 3(D), the object 33 is detected as the object for zoom. Thus, even if the ratio parameter continuously meets the predetermined criterion, the object for zoom may be changed to a more suitable object in accordance with change of the situation. Here, it is a decision criterion whether a ratio parameter is the maximum ratio parameter in the objects which is equal to or less than a predetermined ratio.

The following scenes can be also assumed.

If the person 32 which is a subject moves himself and approaches the image capturing unit 11 after the zoom processing in the state of Fig. 3(D) is finished, the person 32 will be displayed on the display screen 31 as shown in Fig. 3(E). In the state of Fig. 3(E), the object 33 which is equivalent to the whole body of the person 32 is chosen as the object for zoom. However, since the person 32 approaches the image capturing unit 11, the person 32's display size increases to a size which is equivalent to the size of the whole display screen 31. If the ratio parameter Px of the object 33 which is equivalent to the whole body of the person 32 does not meet the condition of the candidates for zoom, another object except the object 33 will be determined as the object for zoom. Here, the object 34 showing the region of the face smaller than the whole body of the person 32 among the objects detected in the display screen 31 of Fig. 3(E) is newly chosen as the object for zoom. Therefore, as shown in Fig. 3(F), the reference position of the object 34 is specified as a new zoom center position O.

Thus, even if the detected object moves and does not meet the condition of the candidates for zoom, it is possible to follow another object as the object for zoom with high operability, without receiving an instruction through the manipulation unit 18.

### (Modification 1)

Next, a modification 1 of the zoom center position control with the digital camera 10 is described.

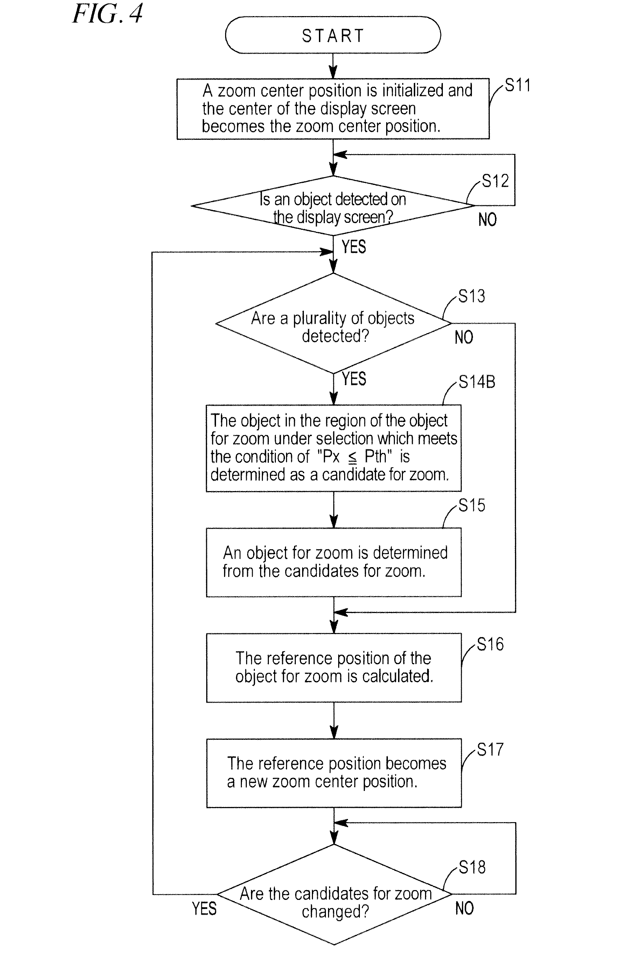

Fig. 4 is a flow chart which shows the modification 1 of the zoom center position control with the digital camera 10. The same numbers are given and shown in Fig. 4 to the same steps as the steps shown in Fig. 2. In the control shown in Fig. 4, Step S14B differs from Step 14 of Fig. 2.

In Step S14B, the center position changing unit 16 determines the candidates for zoom from the objects in the region of the already determined object for zoom (under selection). The reference position of the candidate for zoom is located in the region of the object for zoom whose reference is already determined.

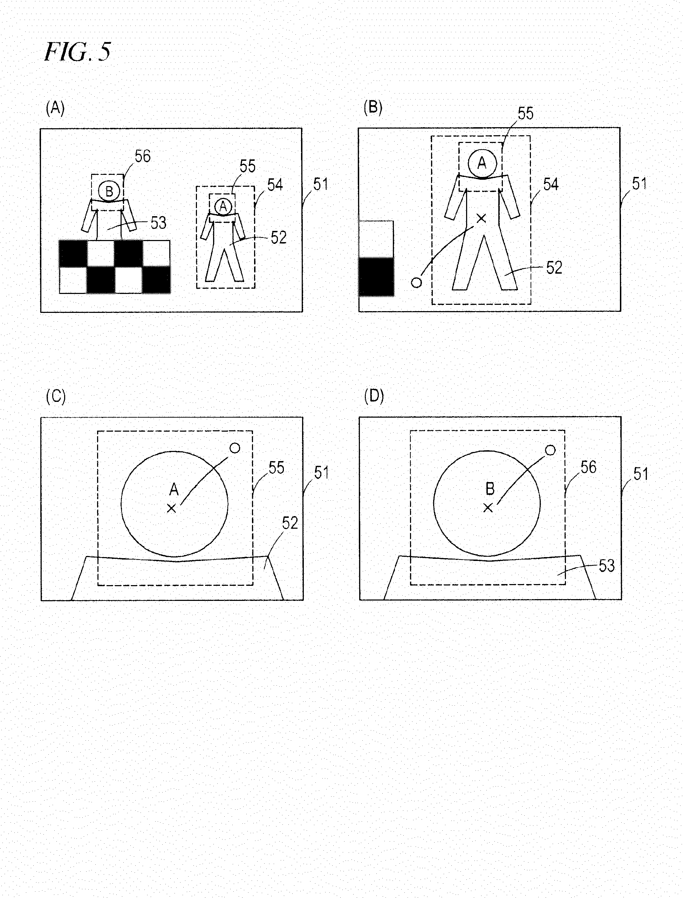

Fig. 5 shows display examples at the time of performing the zoom center position control shown in Fig. 4.

Fig. 5(A) is a state before the zoom center position control is started, and the whole image outputted from the image capturing unit 11 has appeared on a display screen 51. In Fig. 5(A), two persons 52 and 53 are included as subjects. In the state of Fig. 5(A), an object 54 which is equivalent to the whole body of the right side person 52, an object 55 which is equivalent to the region of the right side person 52's face, and an object 56 which is equivalent to the region of the left side person 53's face are detected by the object detection unit 13, respectively.

When the preview display shown in Fig. 5(A) is performed, the object 54 which is equivalent to the whole body of the person 52, the object 55 which is equivalent to the region of the person 52's face and the object 56 which is equivalent to the region of the person 53's face become candidates for zoom, respectively. In these candidates for zoom, for example, the object 54 which is equivalent to the whole body of the person 52 which is the object with the greatest display size is chosen as the object for zoom.

If a zoom-in operation is performed by the manipulation unit 18, as shown in Fig. 5(B), the reference position of the object 54 which is equivalent to the whole body of the person 52 is specified as the zoom center position O. and the object 54 is expanded and displayed with the zoom center position O as a center.

As shown in Fig. 5(A), after the object 54 which is equivalent to the whole body of the person 52 is determined as the object for zoom, when a zoom-in operation is performed as shown in Fig. 5(B), the ratio parameter Px of the object 54 which is equivalent to the whole body of the person 52 does not meet the condition of the candidates for zoom any more. In Fig. 5(A), two objects, that is, the object 55 which is equivalent to the region of the person 52's face and the object 56 which is equivalent to the region of the person 53's face appear on the display screen 51 with a mutually equivalent display size. In this case, by performing the control shown in Fig. 4, only the object 52 serves as a candidate for zoom, and is chosen as a new object for zoom. This is because the object 55 which is equivalent to the region of the person 52's face is inside the object 54 which is equivalent to the region of the whole body of the person 52 who is the already determined present object for zoom. Therefore, as shown in Fig. 5(C), the zoom processing is performed by making the reference position of the object 55 which is equivalent to the region of the person 52's face to be the zoom center position O.

On the other hand, since the object 56 which is equivalent to the region of the person 53's face is located outside the object 54 which is equivalent to the region of the whole body of the person 52, the object 56 does not serve as a candidate for zoom. Therefore, when the control shown in Fig. 4 is performed, the zoom processing is not performed by making the object 56 which is equivalent to the region of the person 53's face to be the zoom center position O, as shown in Fig. 5(D).

Thus, in the zoom-in operation, the reference position of the object 55 which is equivalent to the region of the person 52's face instead of the object 56 which is equivalent to the region of the person 53's face is specified as a zoom center position next to the object 54 which is equivalent to the region of the whole body of the person 52. Therefore, an unnatural display from the viewpoint of a user, such as a sudden change of the position of the displayed object, will not occur, and a more natural change of the followed object at the time of zoom processing can be seen.

### (Modification 2)

Next, a modification 2 of the zoom center position control with the digital camera 10 is described.

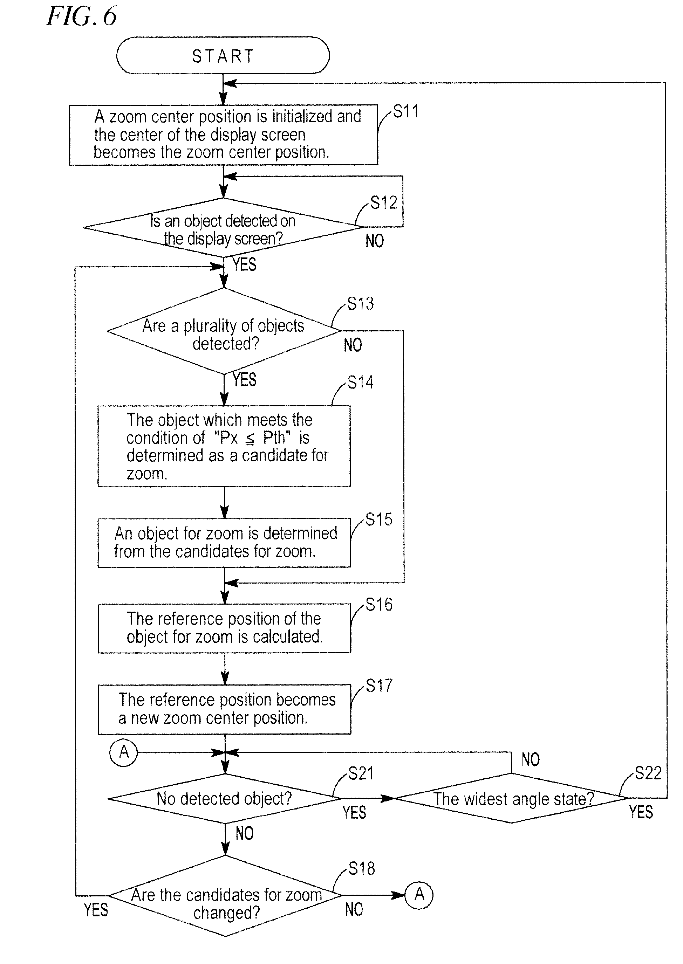

Fig. 6 is a flow chart which shows the modification 2 of the zoom center position control with the digital camera 10. The same numbers are given and shown in Fig. 6 to the same steps as the steps shown in Fig. 2. The control shown in Fig. 6 differs from that of Fig. 2 in that Steps S21 and S22 are added.

In Step S21, after Step S17, the object detection unit 13 identifies whether no objects in the image displayed by the image display unit 19 are detected. If one or more objects are detected, the flow proceeds to Step S18, and if there is no detected object, the flow proceeds to Step S22.

In Step S22, the zoom control unit 17 identifies whether the image displayed by the image display unit 19 is an image which is captured by the image capturing unit 11 in a state of the widest angle (the widest angle state). If the image is captured in the widest angle state, the flow proceeds to Step S11, and if the image is not captured in the widest angle state, the flow proceeds to Step S21.

Therefore, the center position changing unit 16 forbids the change of the zoom center position until the zoom-out is performed to reach the widest angle state, even if the object which has been determined as the object for zoom becomes undetected by the object detection unit 13. Therefore, it can be seen from the viewpoint of a user that each of the objects is zoom-processed more naturally. If the state reaches the widest angle state, since the processing is resumed from Step S11, the zoom center position O will be initialized.

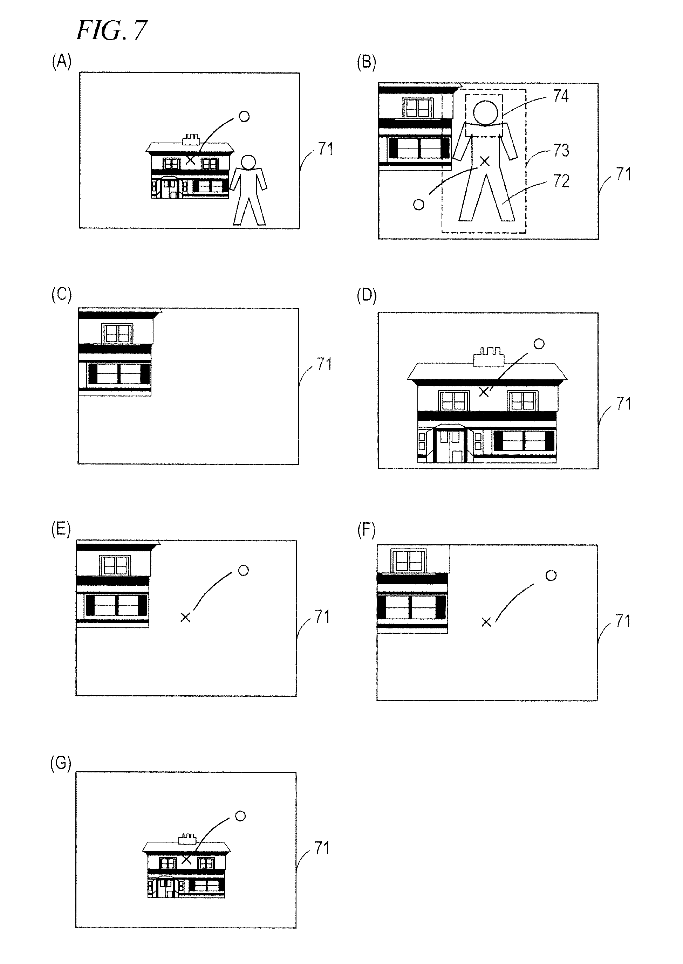

Fig. 7 shows display examples at the time of performing the zoom center position control shown in Fig. 6.

Here, a preview display is performed on a display screen 71 as shown in Fig. 7(A), and it is assumed that a person 72 is zoomed in as an object for zoom as shown in Fig. 7(B). During the zoom-in of the person 72, as shown in Fig. 7(C), it is assumed that an object 73 which is equivalent to the whole body of the person 72 who is the object for zoom until then becomes undetected by the object detection unit 13 for some reason.

In the state that the object for zoom is not detected, if the zoom center position O is temporarily returned to the initial state, that is, if the zoom center position O is suddenly returned to the reference position of the whole image captured by the image capturing unit 11, and the zoom-in is continued, an expanded image will be displayed with the zoom center position O in the initial state as a center, as shown in Fig. 7(D). That is, even if the user of the digital camera 10 is observing the person 72 who is the object for zoom, since other objects are expanded and displayed suddenly, the image may look unnatural.

Thus, as shown in Fig. 7(E), the zoom center position O is not changed to the reference position of the whole image captured by the image capturing unit 11, but is maintained to the reference position of the object for zoom which is not detected any more. In this case, if a zoom-in is performed, the zoom magnifying factor will be changed, and an expanded display is performed with the zoom center position O as a center, as shown in Fig. 7(F), but the zoom center position O is not changed until the widest angle state is reached. On the other hand, if a zoom-out is continued and the widest angle state is reached, the zoom center position O is changed and initialized as shown in Fig. 7(G).

Thus, according to the zoom center position control shown in Fig. 6, the image displayed on the display screen will not be suddenly changed, and a natural zoom processing is possible.

### (Modification 3)

Next, a modification 3 of the zoom center position control with the digital camera 10 is described.

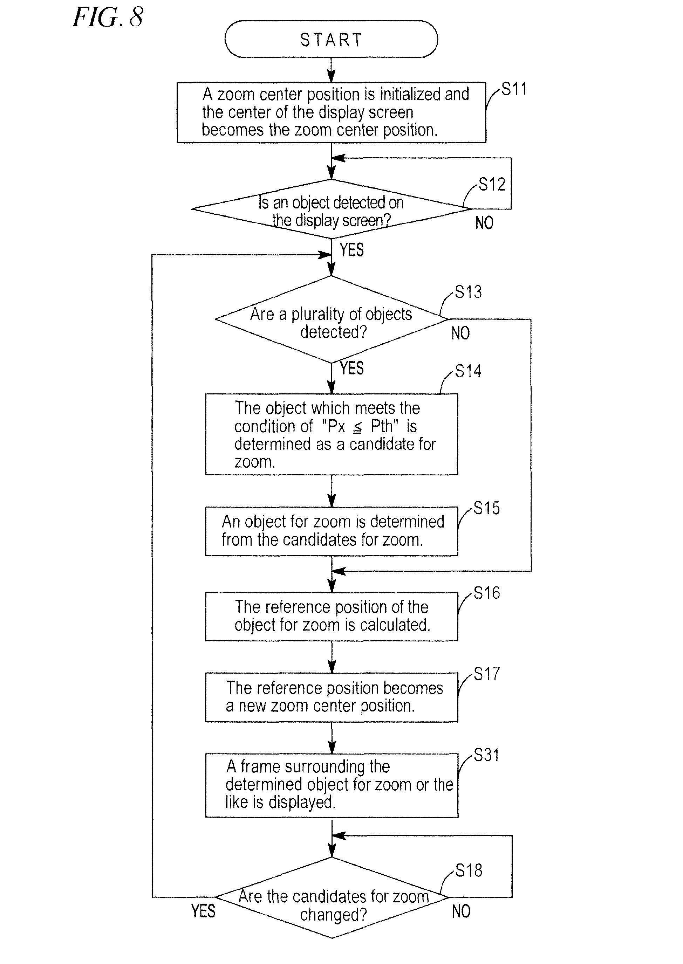

Fig. 8 is a flow chart which shows the modification 3 of the zoom center position control with the digital camera 10. The same numbers are given and shown in Fig. 8 to the same steps as the steps shown in Fig. 2. The control shown in Fig. 8 is different from that in Fig. 2 in that Step S31 is added after Step S17.

In Step S31, according to instructions of the zoom control unit 17, the image display unit 19 displays a frame surrounding the determined object for zoom, a zoom-in button, a zoom-out button, a move button, or the like. The shape of the frame may be, for example, a rectangular shape, and may be an elliptical shape or other shapes. The zoom-in button is a button for increasing the zoom magnifying factor by a predetermined magnification. The zoom-out button is a button for decreasing the zoom magnifying factor by a predetermined magnification. The change of the display of the frame surrounding an object for zoom is equivalent to indicating that the zoom center position is changed.

Fig. 9 shows display examples at the time of performing the zoom center position control shown in Fig. 8.
In the examples shown in Fig. 9, it is assumed that a part of the manipulation unit 18 is arranged to be put on the display screen 91 of the image display unit 19 as a touch panel. In this case, a user can operate buttons which appears on a display screen 91 to perform input operations.

In Fig. 9(A), a zoom-in button 95 and a zoom-out button 96 are displayed on the display screen 91. In Fig. 9(B), a move button 97 besides the zoom-in button 95 and the zoom-out button 96 is displayed on the display screen 91. In Fig. 9(C), a move button 98 besides the zoom-in button 95, the zoom-out button 96 and the move button 97 is displayed on the display screen 91.

As shown in Figs. 9(A) and 9(B), it is assumed that a state that a person 92 does not exist in the display screen 91 is changed to a state that the person 92 exists in the display screen 91. In this case, an object which is equivalent to the whole body of the person 92 in the display screen 91 is detected as one object, and an object which is equivalent to the region of the person 92's face is also detected as one object.

Then, as shown in Fig. 9(B), frames 93 and 94, such as a rectangle surrounding each of the objects, are displayed on the display screen 91 as visible information. The zoom control unit 17 changes the display styles (for example, design of an icon) of the zoom-in button 95 and the zoom button 96 so that a user may understand that each of the objects surrounded by the frames 93 and 94 can be chosen as an object for zoom for. The move button 97 is also displayed on the display screen 91. The move button 97 has a function of giving an instruction of moving at a stretch to the initially determined object for zoom-in order to realize the function of the move button 97, information on the reference position and the zoom magnifying factor of an object for zoom which is determined initially are saved in the image storage unit 12. If the move button 97 is pushed, an object which is equivalent to the whole body of the person 92 is determined as the object for zoom, and the object is expanded and displayed in the center of the display screen 91.

In Fig. 9(C), since the person 92's display size becomes a size more than predetermined and does not meet the condition of the candidates for zoom, the object which is equivalent to the region of the person 92's face is determined as the object for zoom-in this case, the move button 98 is displayed on the display screen 91. The move button 98 has a function of giving an instruction of returning at a stretch to the display of the previously determined object for zoom (object which is equivalent to the whole body of the person 92 here). In order to realize the function of the move button 98, information on the reference position and the zoom magnifying factor of the previously selected object for zoom are saved in the image storage unit 12. If the move button 98 is pushed, the object which is equivalent to the whole body of the person 92 is determined as the object for zoom, and the display is changed to the display of the Fig. 9(B) in which the zoom processing is performed.
Here, although examples are shown in which the frames are displayed, a frame does not need to be displayed when a subject is known even if there is no frame.

Thus, according to the zoom center position control shown in Fig. 8, a user can recognize the object for zoom or the change of the object for zoom easily.

Although the present invention is described in detail with reference to the embodiments, it is apparent that various modifications and amendments may be made by those skilled in the art without departing from the spirit and scope of the invention.
The present application is based on Japanese Patent Application No. 2010-052163 filed on March 9, 2010, the contents of which are incorporated herein by reference.

### Industrial Applicability

The present invention is useful in electronic zoom because even if a plurality of objects are recognized in an image to be processed, it is possible to change the object for zoom processing with high operability.

### Reference Signs List

- 10:: digital camera
- 11:: image capturing unit
- 12:: image storage unit
- 13:: object detection unit
- 14:: reference position detection unit
- 15:: ratio calculating unit
- 16:: center position changing unit
- 17:: zoom control unit
- 18:: manipulation unit
- 19:: image display unit

## Claims

1. An electronic zoom device, comprising:
an image display unit which is configured to display an image on a display screen;
an object detection unit which is configured to detect a plurality of objects in the image which is displayed on the display screen;
a reference position detection unit which is configured to detect reference positions of the objects which are detected by the object detection unit;
a ratio calculating unit which is configured to calculate respective ratio parameters that change according to sizes of the objects detected by the object detection unit relative to the display screen;
a zoom center position setting unit which is configured to set, as a zoom center position, a reference position of a first object whose ratio parameter calculated by the ratio calculating unit meets a predetermined criterion; and
a zoom processing unit which is configured to perform zoom processing of the image displayed on the display screen with a focus on the zoom center position, wherein
the zoom center position setting unit changes the zoom center position from the reference position of the first object to a reference position of a second object whose ratio parameter meets the predetermined criterion when the ratio parameter of the first object does not meet the predetermined criterion any more.

2. The electronic zoom device according to claim 1, wherein
the ratio calculating unit calculates a ratio of an image of an object detected by the object detection unit to the whole display screen as the ratio parameter, and
the predetermined criterion indicates that the ratio parameter is equal to or less than a predetermined ratio.

3. The electronic zoom device according to claim 2, wherein
the predetermined criterion indicates that the ratio parameter is the largest among the objects whose ratio parameter is equal to or less than the predetermined ratio.

4. The electronic zoom device according to claim 2 or 3, wherein
the second object is an object whose reference position is closest to the center position of the display screen.

5. The electronic zoom device according to any one of claims 1 to 4, wherein
the second object is an object whose reference position is located in a region of the first object.

6. The electronic zoom device according to any one of claims 1 to 5, wherein,
when a state changes to an undetected state that no objects are detected by the object detection unit, the zoom center position setting unit forbids change of the zoom center position until the state reaches a widest angle state.

7. The electronic zoom device according to any one of claims 1 to 6, wherein,
when the zoom center position is changed by the zoom center position setting unit, the image display unit indicates that the zoom center position is changed.

8. An electronic zoom method in an electronic zoom device which displays an image on a display screen, the electronic zoom method comprising the steps of:
detecting a plurality of objects in the image displayed on the display screen;
detecting reference positions of the detected objects;
calculating respective ratio parameters that change according to sizes of the detected objects relative to the display screen;
setting a reference position of a first object whose calculated ratio parameter meets a predetermined criterion as a zoom center position;
performing zoom processing of the image displayed on the display screen with a focus on the zoom center position; and
changing the zoom center position from the reference position of the first object to a reference position of a second object whose ratio parameter meets the predetermined criterion when the ratio parameter of the first object does not meet the predetermined criterion any more.

9. A program for causing a computer to execute each step of the electronic zoom method as set forth in claim 8.
